# EUROPÄISCHE PATENTSCHRIFT

(11) **EP 2 752 598 B1**
(45) Veröffentlichungstag und Bekanntmachung des Hinweises auf die Patenterteilung: **17.06.2020**
(21) Anmeldenummer: 13198173.0
(22) Anmeldetag: 18.12.2013
(51) Int. Cl.: F16H 63/48, F16H 59/44

(54) **Verfahren zum Einlegen einer Parksperre eines Kraftfahrzeugantriebsstranges**
Method for inserting a parking lock of a motor vehicle drive train
Procédé d'actionnement d'un frein de stationnement d'une chaîne cinématique de véhicule automobile

(30) Priorität: 04.01.2013 DE 102013000032
(43) Veröffentlichungstag der Anmeldung: 09.07.2014
(73) Patentinhaber: Magna PT B.V. & Co. KG, 74199 Untergruppenbach (DE)
(72) Erfinder: Hoffmeister, Thomas, 70825 Korntal-Münchingen (DE); Matusche, Ingo, 74199 Untergruppenbach (DE)
(74) Vertreter: Rausch, Gabriele

(56) Entgegenhaltungen:
- EP-A1- 1 835 204
- EP-A2- 1 103 744
- DE-A1-102004 008 610
- DE-A1-102004 039 467
- US-A- 5 993 351

## Beschreibung

Die vorliegende Erfindung betrifft ein Verfahren zum Einlegen einer Parksperre eines Kraftfahrzeugantriebsstranges, wobei der Antriebsstrang einen Antriebsmotor, ein Getriebe und eine Parksperre sowie in der Regel eine auf Räder des Kraftfahrzeuges wirkende Bremseinrichtung aufweist, wobei die Parksperre mittels eines Parksperrenaktuators einlegbar ist.

Auf dem Gebiet der Kraftfahrzeugantriebsstränge ist es bekannt, ein Kraftfahrzeug mittels einer so genannten Parksperre zu immobilisieren. Derartige Parksperren werden insbesondere dann verwendet, wenn die Kraftfahrzeugantriebsstränge automatisierte Getriebe wie Wandlerautomatikgetriebe, Doppelkupplungsgetriebe etc. aufweisen.

Die Parksperre weist dabei in der Regel ein Parksperrenrad auf, das drehfest mit einer Welle des Getriebes (in der Regel eine Abtriebswelle) verbunden ist und folglich in einem festen Übersetzungsverhältnis zu den angetriebenen Rädern des Kraftfahrzeuges steht. Ferner beinhaltet eine derartige Parksperre in der Regel eine Parksperrenklinke, die im eingelegten Zustand in Zahnlücken des Parksperrenrades greift, um auf diese Weise eine mechanische formschlüssige Immobilisierung des Kraftfahrzeuges zu erzielen. Die Parksperrenklinke kann ferner gegenüber dem Parksperrenrad abgehoben werden, um die Parksperre auf diese Weise auszulegen.

Generell ist es bekannt, die Parksperre manuell einzulegen. In vielen Kraftfahrzeugen wird hierzu ein Hebel in eine Parksperrenposition "P" bewegt, wobei der Hebel mechanisch (über ein Gestänge oder dergleichen) mit der Parksperre verbunden ist, um auf diese Weise die Parksperrenklinke in eine Zahnlücke des Parksperrenrades zu drücken.

Es ist jedoch auch bekannt, eine Parksperre eines solchen Antriebsstranges mittels eines Parksperrenaktuators zu betätigen. In diesem Fall wird ein Parksperrenwunsch elektronisch erfasst und mittels einer Steuervorrichtung an den Parksperrenaktuator weitergeleitet, der dann die Parksperre einlegt.

In der Regel wird die Parksperre eingelegt, wenn das Fahrzeug sich bereits im Stillstand befindet. Wenn ein Parksperrenwunsch bei einer Geschwindigkeit des Kraftfahrzeuges von größer 0 km/h ausgelöst wird, kann es bei sehr niedrigen Geschwindigkeiten sein, dass die Parksperrenklinke sofort in eine Lücke des Parksperrenrades greift, was zu einem als sehr unkomfortabel empfundenen Ruck des Kraftfahrzeuges führt, das hierdurch unmittelbar zum Stillstand gebracht wird. Die Parksperre wird hierdurch auch mechanisch relativ stark belastet. Auch weitere Komponenten des Antriebsstranges können hierdurch mechanisch ungünstig belastet werden. Wenn der Parksperrenwunsch bei höheren Geschwindigkeiten erfolgt, so dreht sich das Parksperrenrad in der Regel so schnell, dass aufgrund einer äußeren Kontur an den Zähnen des Parksperrenrades die Parksperrenklinke abgewiesen wird, also nicht in eine Zahnlücke einfallen kann. Erst wenn eine sehr geringe Geschwindigkeit erreicht ist, erfolgt wiederum ein abruptes Einlegen der Parksperre, was zu einem Ruck des Kraftfahrzeuges führt.

Die EP 1 103 7 44 A2 betrifft eine Steuervorrichtung für einen Parksperrbetrieb eines Fahrzeugs, wobei das Fahrzeug umfasst: Bremsmittel zum Verzögern des Fahrzeugs beim Fahren, ein automatisches Getriebe mit einer Antriebswelle, einem Schalthebel, der in eine Park-Schaltstellung wechseln kann, und ein Sperrmittel zum Sperren der Drehbewegung der Antriebswelle, wenn der Schalthebel in der Park-Schaltstellung ist, wobei die Steuervorrichtung umfasst: Fahrzeuggeschwindigkeitsermittlungsmittel zum Ermitteln einer Fahrzeuggeschwindigkeit; Park-Schaltstellungsermittlungsmittel zum Ermitteln des Wechselns des Schalthebels in die Park-Schaltstellung; Bestimmungsmittel zum Bestimmen, ob die ermittelte Fahrzeuggeschwindigkeit in einem ersten vorherbestimmten Bereich liegt oder nicht, in dem das Sperrmittel ohne Fahrzeugverzögerung betrieben werden kann; und Verhinderungsmittel zum Verhindern, dass das Sperrmittel die Drehbewegung der Abtriebswelle sperrt, bis die ermittelte Fahrzeuggeschwindigkeit im ersten vorbestimmten Bereich liegt; und wobei Aktivierungsmittel zum Aktivieren des Bremsmittels vorgesehen sind, um das Fahrzeug zu verzögern, wenn die ermittelte Fahrzeuggeschwindigkeit innerhalb eines zweiten vorbestimmten Bereichs über dem ersten vorbestimmten Bereich liegt und der Schalthebel in die Park-Schaltstellung gewechselt ist.

DE 10 2004 039467 A1 beschreibt ein Verfahren zum Einlegen einer Parkfunktion in einem automatischen Getriebe. Bei einer Vorgabe der Parkstellung P durch den Fahrer prüft das Steuergerät, ob die Fahrzeuggeschwindigkeit Vist kleiner als ein vorgegebener erster Grenzwert V1 der Fahrzeuggeschwindigkeit von beispielsweise 2 km/h ist. Ist dies der Fall so werden die Aktuatoren des Getriebes so angesteuert, dass die Parkstellungs-Betriebsstufe am Getriebe eingestellt ist. Ist die Fahrzeuggeschwindigkeit Vist jedoch größer als der Grenzwert V1, so übermittelt das erste Steuergerät dem zweiten Steuergerät ein Signal, woraufhin das zweite Steuergerät die Fahrzeugbremsen entsprechend einem ersten Bremssteuerprogramm betätigt. Dies kann beispielsweise als Vollbremsung geschehen.

Vor diesem Hintergrund ist es eine Aufgabe der Erfindung, ein verbessertes Verfahren zum Einlegen einer Parksperre eines Kraftfahrzeuges anzugeben, das insbesondere einen verbesserten Komfort bieten kann.

Diese Aufgabe wird gemäß einem ersten Aspekt der vorliegenden Erfindung gelöst durch ein Verfahren zum Einlegen einer Parksperre eines Kraftfahrzeugantriebsstranges, der eine elektrische Maschine, ein Doppelkupplungsgetriebe mit einem ersten und einem zweiten Teilgetriebe, wobei die elektrische Maschine mit einem Eingang von einem der zwei Teilgetriebe verbunden ist, und eine Parksperre aufweist, wobei die Parksperre mittels eines Parksperrenaktuators einlegbar ist, mit den Schritten, einen Parksperrenbefehl zum Einlegen der Parksperre zu erfassen, die Geschwindigkeit des Kraftfahrzeuges zu erfassen, das Kraftfahrzeug mittels der elektrischen Maschine abzubremsen, wenn die Geschwindigkeit des Kraftfahrzeuges kleiner ist als ein erster Schwellenwert, und den Parksperrenaktuator anzusteuern, um die Parksperre einzulegen, wenn die Geschwindigkeit des Kraftfahrzeuges kleiner ist als ein zweiter Schwellenwert, der kleiner ist als der erste Schwellenwert. Wenn die Geschwindigkeit des Kraftfahrzeuges bei Erfassen des Parksperrenbefehls kleiner ist als der zweite Schwellenwert oder ein zwischen dem ersten und dem zweiten Schwellenwert liegenden Zwischenschwellenwert, werden die Schritte des Abbremsens des Kraftfahrzeuges und des Ansteuerns des Parksperrenaktuators zumindest abschnittsweise parallel durchgeführt, wobei vor dem Bremsschritt eine Gangstufe in dem Teilgetriebe eingelegt wird, dessen Eingang mit der elektrischen Maschine verbunden ist.

Bei einem Kraftfahrzeugantriebsstrang, der eine elektrische Maschine aufweist, wird folglich dann, wenn das Kraftfahrzeug beim Erfassen des Parksperrenwunsches noch fährt, die elektrische Maschine dazu benutzt, um das Fahrzeug abzubremsen. Hierdurch kann die elektrische Maschine in den Generatorbetrieb geschaltet werden, wenn dies nicht bereits der Fall ist. Im Falle, dass die elektrische Maschine sich bereits im Generatorbetrieb befindet, kann die Bremswirkung der elektrischen Maschine gezielt eingeleitet werden, indem das Rekuperationsdrehmoment der elektrischen Maschine erhöht wird, insbesondere auf wenigstens 50 %, vorzugsweise wenigstens 70 % des maximalen Rekuperationsmomentes.

Sobald die Geschwindigkeit kleiner ist als ein zweiter Schwellenwert, der entweder eine sehr niedrige Fahrzeuggeschwindigkeit darstellt oder eine Fahrzeuggeschwindigkeit von Null darstellt, wird die Parksperre mittels des Parksperrenaktuators eingelegt.

Hierdurch kann die Qualität der Parksperrenfunktionen von herkömmlichen Antriebssträngen erreicht bzw. übertroffen werden. Auch kann der Komfort beim Einlegen der Parksperre gegenüber herkömmlichen Kraftfahrzeugantriebssträngen verbessert werden. Hierdurch kann auch das Geräusch beim Einlegen der Parksperre gegebenenfalls verringert werden. Insgesamt kann gegebenenfalls ein schnelleres und komfortableres Anhalten bei Erfassen eines Parksperrenbefehls realisiert werden.

Ein schnelleres Anhalten bei Erfassen des Parksperrenwunsches kann auch deswegen erzielt werden, da bei herkömmlichen Antriebssträngen das Fahrzeug nahezu ungebremst weiterrollt, während die Parksperrenklinke von dem Parksperrenrad abgewiesen wird. Bei dem erfindungsgemäßen Verfahren kann hingegen mit Erfassen des Parksperrenwunsches unmittelbar ein Bremsvorgang mittels der elektrischen Maschine eingeleitet werden.

Der Antriebsstrang ist ein Hybrid-Antriebsstrang , der einen Verbrennungsmotor und eine elektrische Maschine als Antriebsmotoren aufweist. Das Teilgetriebe, an das die elektrische Maschine angebunden ist, kann das Getriebe mit den geraden Vorwärtsgangstufen sein (Vorwärtsgangstufen zwei, vier, sechs, etc.), kann jedoch auch das Teilgetriebe mit den ungeraden Gangstufen sein.

Die Parksperre kann, wie oben erwähnt, ein Parksperrenrad und eine Parksperrenklinke aufweisen, kann jedoch auch auf andere Art und Weise eine mechanische, insbesondere formschlüssige Immobilisierung des Kraftfahrzeuges erzielen.

Der erste Schwellenwert liegt vorzugsweise im Bereich von 4 km/h bis 10 km/h. Oberhalb des ersten Schwellenwertes wird der Parksperrenbefehl vorzugsweise abgewiesen oder gespeichert und erst dann initiiert, wenn die Geschwindigkeit unter den ersten Schwellenwert gefallen ist. Der zweite Schwellenwert liegt vorzugsweise im Bereich von 0 km/h bis 2,5 km/h.

Zum Abbremsen wird das Rekuperationsmoment der elektrischen Maschine vorzugsweise auf ein Drehmoment erhöht, das an den Rädern ein Bremsdrehmoment einrichtet, das, wie erwähnt, vorzugsweise größer ist als 50 % des maximal von der elektrischen Maschine erzeugbaren Rekuperationsmomentes. Von besonderem Vorzug ist es, wenn das Bremsmoment größer ist als 70 %, insbesondere größer als 80 %, vorzugsweise größer als 90 % des maximalen Rekuperationsmomentes. Von besonderem Vorzug ist es, wenn das Bremsmoment dem maximalen Rekuperationsmoment entspricht.

Gemäß einer besonders bevorzugten Ausführungsform weist das Getriebe eine Mehrzahl von Gangstufen auf, die mittels eines Getriebeaktuators ein- und auslegbar sind.

Bei Hybrid-Antriebssträngen kann das Getriebe typischerweise fünf, sechs, sieben oder mehr Vorwärtsgangstufen und wenigstens eine Rückwärtsgangstufe aufweisen.

Der Begriff des Einlegens einer Gangstufe soll folglich beinhalten, dass zunächst geprüft wird, ob bereits eine Gangstufe eingelegt ist, gegebenenfalls welche Gangstufe eingelegt ist, und dann gegebenenfalls gezielt eine Gangstufe einzulegen, wenn zuvor keine oder eine nicht geeignete Gangstufe eingelegt war.

Das Teilgetriebe, an dessen Eingang die elektrische Maschine angebunden ist, ist vorzugsweise jenes Teilgetriebe, das die Vorwärtsgangstufen zwei, vier, sechs aufweist, kann jedoch auch das andere Teilgetriebe sein.

Ferner ist es insgesamt vorteilhaft, wenn die eingelegte Gangstufe die niedrigste oder die zweitniedrigste Gangstufe des Getriebes ist.

In beiden Fällen kann über die dann eingerichtete Übersetzung eine hohe Bremswirkung an den Rädern des Kraftfahrzeuges erzielt werden.

Bei einem Doppelkupplungsgetriebe, bei dem die elektrische Maschine am Eingang des Teilgetriebes mit den geraden Vorwärtsgangstufen angebunden ist, wird in diesem Teilgetriebe vorzugsweise die Gangstufe zwei eingelegt. Wenn die elektrische Maschine an dem anderen Teilgetriebe angebunden ist, wird dort vorzugsweise die Gangstufe eins eingelegt.

Gemäß einem zweiten Aspekt der vorliegenden Erfindung wird die obige Aufgabe gelöst durch ein Verfahren zum Einlegen einer Parksperre eines Kraftfahrzeugantriebsstranges gemäß Anspruch 4.

Das Verfahren gemäß dem zweiten Aspekt der vorliegenden Erfindung entspricht generell dem Verfahren des ersten Aspektes, wobei in diesem Fall das Abbremsen des Fahrzeugs nicht mittels der elektrischen Maschine erfolgt, sondern mittels der in dem Kraftfahrzeug ohnehin vorhandenen Bremseinrichtung bzw. Bremsanlage.

Eine derartige Bremsfunktion ist natürlich nur dann realisierbar, wenn die Bremse aktuatorisch betätigt wird, also ein Bremsvorgang auch ohne Betätigung eines Bremspedals in dem Kraftfahrzeug eingeleitet werden kann, wie dies typischerweise bei ESP-Anlagen der Fall ist.

Da in der Regel jedoch die Steuereinrichtungen für die Bremseinrichtung einerseits und für den Getriebezweig des Antriebsstranges andererseits getrennt voneinander ausgebildet sind, ist generell das Verfahren gemäß dem ersten Aspekt mit geringerem Aufwand zu realisieren, da hierbei im Wesentlichen nur die Software zur Ansteuerung der elektrischen Maschine entsprechend angepasst werden muss. Bei dem Verfahren gemäß dem zweiten Aspekt muss gegebenenfalls auch noch eine sichere Übertragung zwischen den Steuereinrichtungen der Bremseinrichtung und des Getriebes erfolgen.

Es versteht sich, dass die Verfahren gemäß dem ersten und dem zweiten Aspekt auch miteinander kombiniert werden können, so dass der Bremsschritt sowohl mittels der Bremseinrichtung als auch mittels einer elektrischen Maschine erfolgt.

Generell vergeht zwischen dem Ansteuern des Parksperrenaktuators, um die Parksperre einzulegen, und dem Zeitpunkt, zu dem die Parksperre tatsächlich eingelegt ist, eine gewisse Zeit. Ferner wird aus Sicherheitsgründen generell gefordert, dass das Fahrzeug dann, wenn ein Parksperrenbefehl angenommen wird, die Parksperre sicher (beispielsweise innerhalb von etwa einer Sekunde) eingelegt wird.

Demzufolge ist es von Vorzug, wenn mit dem Erfassen eines Parksperrenbefehls bei einer Geschwindigkeit unterhalb des Schwellenwertes das Bremsmoment erzeugt wird, um das Kraftfahrzeug abzubremsen und parallel, insbesondere gleichzeitig hiermit, der Parksperrenaktuator angesteuert wird. Bei dieser Ausführungsform erfolgt folglich während der genannten Verzögerungszeit ein Abbremsen mittels der elektrischen Maschine (und/oder der Bremsanlage für die Räder).

Der Schwellenwert ist bei dieser Ausführungsform der zweite Schwellenwert oder ein Zwischenschwellenwert, der zwischen dem ersten Schwellenwert und dem zweiten Schwellenwert liegt und beispielsweise im Bereich von 2,5 km/h bis 4 km/h liegen kann.

Bei dieser Ausführungsform wird unterhalb dieses Schwellenwertes erreicht, dass die Parksperre schnellstmöglich eingelegt wird, indem der Parksperrenaktuator sofort nach Erfassen des Parksperrenbefehls angesteuert wird. Zumindest abschnittsweise parallel hiermit wird dabei ein Bremsmoment aufgebracht, um die Geschwindigkeit zu reduzieren, so dass das mechanische Einlegen der Parksperre bei einer geringeren Fahrzeuggeschwindigkeit erfolgen kann.

Generell wird im Stand der Technik unterschieden zwischen Situationen oberhalb und unterhalb des obengenannten ersten Schwellenwertes. Oberhalb des ersten Schwellenwertes ist die Parksperrenanordnung mechanisch so ausgelegt, dass das Einlegen der Parksperre verhindert wird (beispielsweise durch entsprechende Konturierung von Zähnen eines Parksperrenrades oder dergleichen). Bei einer Parksperre, die mittels eines Parksperrenaktuators betätigt wird, kann oberhalb dieses ersten Schwellenwertes alternativ oder zusätzlich ein Parksperrenbefehl abgewiesen werden.

Ferner ist es insgesamt vorteilhaft, wenn unterhalb des ersten Schwellenwertes ein Parksperrenbefehl generell angenommen und umgesetzt wird.

Mit dem erfindungsgemäßen Abbremsen des Kraftfahrzeuges vor oder gleichzeitig mit dem tatsächlichen Ansteuern des Parksperrenaktuators ist es möglich, den ersten Schwellenwert gegenüber Lösungen des Standes der Technik anzuheben, beispielsweise in Bereiche größer 6 km/h, insbesondere größer 8 km/h. Vorzugsweise ist der erste Schwellenwert jedoch kleiner als 15 km/h, insbesondere kleiner als 12 km/h.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, die durch die Ansprüche definiert wird, zu verlassen.

Ausführungsbeispiele der Erfindung sind in der Zeichnung dargestellt und werden in der nachfolgenden Beschreibung näher erläutert. Es zeigen:
Fig. 1: eine schematische Darstellung eines Kraftfahrzeugantriebsstranges, an dem die erfindungsgemäßen Verfahren durchgeführt werden können;
Fig. 2: ein Flussdiagramm einer Ausführungsform eines erfindungsgemäßen Verfahrens;
Fig. 3: ein Zeitablaufdiagramm von Parksperrensignalen und -befehlen sowie von der Geschwindigkeit des Kraftfahrzeuges und dem von der elektrischen Maschine ausgeübten Rekuperationsmoment; und
Fig. 4: ein weiteres Zeitablaufdiagramm von Geschwindigkeit des Kraftfahrzeuges über der Zeit bei verschiedenen Varianten und Ausgangssituationen bei Erfassen eines Parksperrenbefehls.

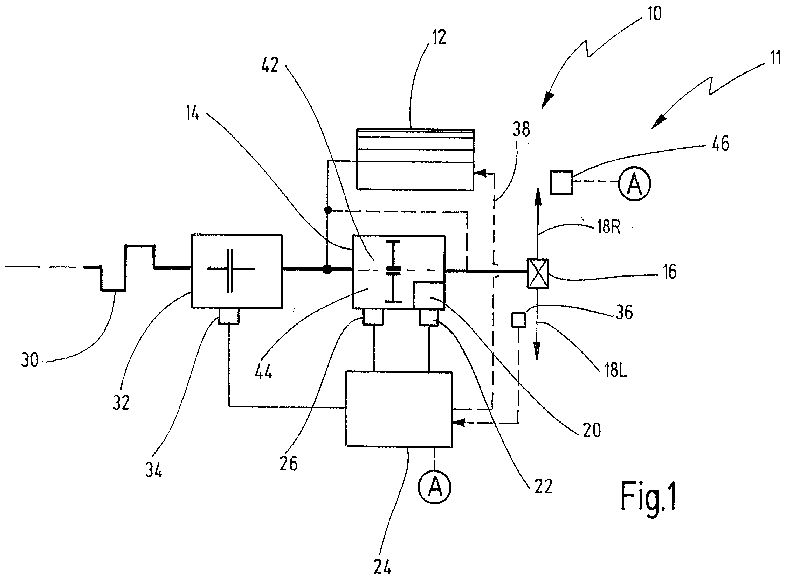

In Fig. 1 ist ein Antriebsstrang für ein Kraftfahrzeug schematisch dargestellt und generell mit 10 bezeichnet. Der Antriebsstrang 10 dient zum Antreiben eines schematisch angedeuteten Kraftfahrzeuges 11.

Der Antriebsstrang 10 weist eine elektrische Maschine 12 auf, die als Antriebsmotor zum Antreiben des Kraftfahrzeuges 11 ausgebildet ist und ferner in einen Generatormodus zum Erzeugen eines Rekuperationsmomentes geschaltet werden kann.

Der Antriebsstrang 10 beinhaltet ferner ein Getriebe 14, das als Doppelkupplungsgetriebe ausgebildet ist.

Ein Ausgang des Getriebes 14 ist mit einem Differential 16 verbunden, mittels dessen Antriebsleistung auf angetriebene Räder 18L, 18R des Kraftfahrzeuges 11 verteilt wird.

Der Antriebsstrang 10 beinhaltet ferner eine Parksperrenanordnung 20, die beispielsweise in das Getriebe 14 integriert sein kann. Die Parksperrenanordnung 20 kann in klassischer Weise mittels eines Parksperrenrades und einer Parksperrenklinke realisiert sein. Die Parksperrenanordnung 20 wird mittels eines Parksperrenaktuators 22 betätigt, bei dem es sich um einen hydraulischen, einen elektromechanischen oder einen elektromagnetischen Aktuator handeln kann. Der Parksperrenaktuator 22 ist mit einer Steuervorrichtung 24 verbunden, die dazu ausgebildet ist, den Parksperrenaktuator 22 zum Ein- und Auslegen der Parksperrenanordnung 20 anzusteuern.

Bei 26 ist ein Getriebeaktuator gezeigt, mittels dessen vorzugsweise Gangstufen des Getriebes 14 ein- und auslegbar sind. Auch der Getriebeaktuator 26 kann ein hydraulischer, ein elektromechanischer oder ein elektromagnetischer Aktuator sein.

In einer in Fig. 1 dargestellten Ausführungsform ist der Antriebsstrang 10 als Hybrid-Antriebsstrang ausgebildet und weist ferner einen Verbrennungsmotor 30 und eine Kupplungsanordnung 32 auf. Die Kupplungsanordnung 32 kann mittels eines Kupplungsaktuators 34 betätigbar sein, der ebenfalls hydraulisch, elektromechanisch oder elektromagnetisch ausgebildet sein kann.

Die Aktuatoren 22, 26, 34 können mittels der Steuervorrichtung 24 angesteuert werden. Die Steuervorrichtung 24 empfängt ferner ein Signal von einem Geschwindigkeitssensor 36, der die Geschwindigkeit v des Kraftfahrzeuges 11 erfasst, beispielsweise durch Erfassen der Drehzahl von einem oder mehreren nicht angetriebenen Rädern des Kraftfahrzeuges.

Die Steuervorrichtung 24 ist ferner mit der elektrischen Maschine 12 verbunden, wodurch eine Motoransteuerung 38 eingerichtet wird. Es versteht sich, dass die elektrische Maschine 12 mittels einer Leistungselektronik ansteuerbar ist, die in diesem Fall separat ausgebildet sein kann oder in die Steuervorrichtung 24 integriert sein kann. Ferner versteht sich, dass der Antriebsstrang 10 eine nicht dargestellte Batterie zum Bereitstellen von elektrischer Energie zum Betrieb der elektrischen Maschine 12 sowie einen Tank zum Versorgen des Verbrennungsmotors 30 aufweisen kann.

Die elektrische Maschine 12 kann, wie es in Fig. 1 gestrichelt dargestellt ist, an den Ausgang des Getriebes 14 angebunden sein, wobei diese Ausführungsform nicht Bestandteil der Erfindung ist.

Gemäß der Erfindung ist der Antriebsstrang 10 mit einem Doppelkupplungsgetriebe ausgerüstet und die Kupplungsanordnung 32 beinhaltet zwei Reibkupplungen, die als trockene Reibkupplungen oder als nasslaufende Lamellenkupplungen ausgebildet sein können. In diesem Fall weist das Getriebe 14 zwei Teilgetriebe 42, 44 auf, von denen eines den geraden Vorwärtsgangstufen zugeordnet ist und von denen das andere den ungeraden Vorwärtsgangstufen zugeordnet ist. In diesem Fall weist der Eingang des Getriebes 14 zwei Wellen auf. Die elektrische Maschine 12 ist in diesem Fall an eines der zwei Teilgetriebe angebunden, und zwar an den Eingang des Teilgetriebes. Die Anbindung an den Eingang des Getriebes 14 soll dabei beinhalten, dass die elektrische Maschine 12 außerhalb eines Getriebegehäuses des Getriebes 14 an eine Eingangswelle des Getriebes 14 angebunden ist. Insbesondere kann die elektrische Maschine 12 jedoch im Inneren eines Getriebegehäuses an das Getriebe 14 angebunden sein, beispielsweise über einen Stirnradsatz, der ein Gangzahnrad des Getriebes 14 beinhaltet. In diesem Fall kann die elektrische Maschine 12 achsparallel zu den Wellen des Getriebes 14 angeordnet sein.

In Fig. 1 ist ferner bei 46 schematisch eine Bremseinrichtung dargestellt, bei der es sich um eine übliche Bremsanlage mit Bremsen für die Räder handeln kann. Die Bremseinrichtung 46 ist dabei mittels der Steuervorrichtung 24 ansteuerbar. Alternativ ist vorgesehen, dass die Bremseinrichtung 46 eine eigene Steuervorrichtung aufweist, die über eine Signalverbindung mit der Steuervorrichtung 24 in Verbindung steht.

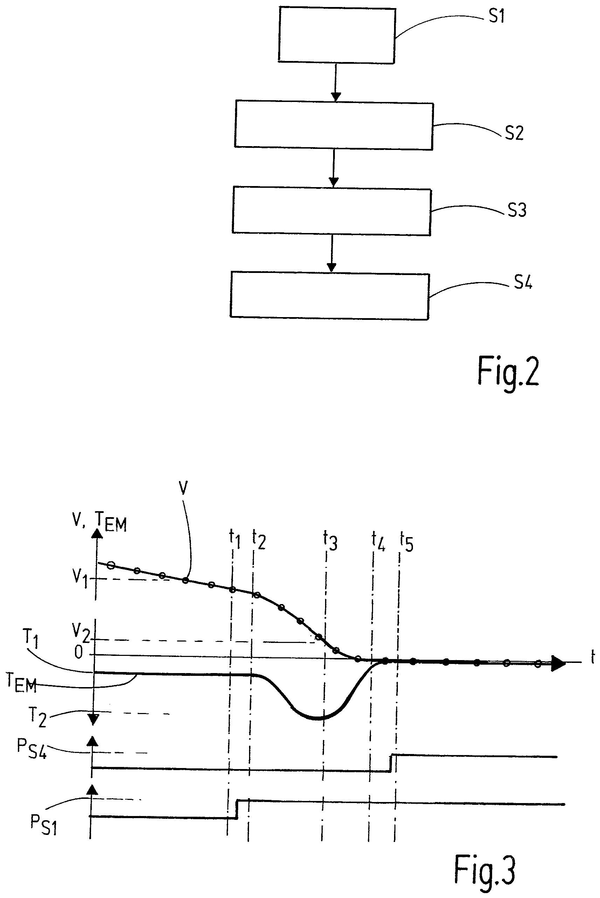

In den Fig. 2 und 3 werden beispielhaft Verfahren zum Einlegen der Parksperrenanordnung 20 des Antriebsstranges 10 beschrieben. Fig. 2 zeigt dabei ein Ablaufdiagramm, und Fig. 3 zeigt ein Zeitablaufdiagramm.

Gemäß Fig. 2 erfolgt in einem Schritt S1 zunächst das Erfassen eines Parksperrenbefehls im Stand der Technik. Dies kann beispielsweise über einen Sensor an einem Gangschalthebel des Kraftfahrzeuges 11 erfolgen, der erfasst, dass der Fahrer des Kraftfahrzeuges 11 die Parksperre einlegen möchte. Das zugeordnete Sensorsignal wird dann der Steuervorrichtung 24 zugeleitet.

Ferner wird in der Steuervorrichtung 24 die Geschwindigkeit v des Kraftfahrzeuges 11 erfasst, und zwar mittels des Geschwindigkeitssensors 36.

Wenn die Geschwindigkeit v des Kraftfahrzeuges 11 kleiner ist als ein erster Schwellenwert (V₁ in Fig. 3), dann wird der Parksperrenaktuator 22 nicht sofort angesteuert, um die Parksperre 20 einzulegen. Stattdessen wird das Kraftfahrzeug 11 zunächst in einem Schritt S3 abgebremst. Dies kann, wie es in Fig. 3 gezeigt ist, erfindungsgemäß durch ein Rekuperationsdrehmoment T_{EM} der elektrischen Maschine oder zusätzlich durch die Bremseinrichtung 46. Erfindungsgemäß erfolgt vor dem Schritt S3 noch ein Schritt S2, in dem eine Gangstufe des Getriebes eingelegt wird.

Anschließend wird die Geschwindigkeit des Kraftfahrzeuges weiterhin überwacht. Wenn die Geschwindigkeit des Kraftfahrzeuges 11 kleiner ist als ein zweiter Schwellenwert (V₂ in Fig. 3), der kleiner ist als der erste Schwellenwert V₁, dann wird der Parksperrenaktuator 22 angesteuert, um die Parksperre 20 einzulegen (Schritt S4).

Der zweite Schwellenwert V₂ ist vorzugsweise der Stillstand des Kraftfahrzeuges 11, also eine Fahrzeuggeschwindigkeit von 0 km/h, kann jedoch auch eine sehr kleine Fahrzeuggeschwindigkeit sein (beispielsweise im Bereich 0,5 bis 2 km/h oder 0,5 bis 3 km/h).

Der erste Schwellenwert V₁ liegt vorzugsweise im Bereich von 4 km/h bis 10 km/h, insbesondere im Bereich von 4 km/h bis 6 km/h.

Fig. 3 zeigt den zeitlichen Ablauf, wobei Fig. 3 die Geschwindigkeit v des Kraftfahrzeuges 11 darstellt, das von der elektrischen Maschine erzeugte Bremsmoment (Rekuperationsmoment) T_{EM}, und Parksperrensignale P_{S1} und P_{S4}.

Zu Beginn des zeitlichen Ablaufes der Fig. 3 fährt das Kraftfahrzeug 11 mit einer Geschwindigkeit v, die größer ist als der erste Schwellenwert V₁. Vor einem Zeitpunkt t₁ fällt die Geschwindigkeit v unter den ersten Schwellenwert V₁. In einem Zeitraum zwischen t₁ und t₂ wird ein Parksperrenbefehl P_{S1} erfasst. In Antwort hierauf wird, da die Geschwindigkeit v kleiner ist als V₁, das Kraftfahrzeug 11 mittels der elektrischen Maschine 12 abgebremst, wobei in einem Zeitraum ab t₂ das Rekuperationsmoment der elektrischen Maschine 12 erhöht wird (vom Betrag her erhöht wird, da das Rekuperationsmoment in Fig. 3 als negatives Moment eingetragen ist). Mit anderen Worten wird ein Rekuperationsmoment T_{EM} erzeugt, das zu einem starken Abbremsen des Kraftfahrzeuges führt, wobei der Maximalwert des Rekuperationsmomentes zum Abbremsen dabei größer als ein in diesen Geschwindigkeitsbereichen typischerweise vorhandenes Bremsmoment ist, das im Schubbetrieb gegebenenfalls ohnehin von der elektrischen Maschine 12 aufgebracht ist und das in Fig. 3 bei T₁ gezeigt ist. Das zum Bremsen nach dem Erfassen des Parksperrenbefehls ausgeübte Rekuperationsmoment ist bei T₂ gezeigt.

Durch das erhöhte Rekuperationsmoment T₂ wird das Kraftfahrzeug 11 ab t₂ abgebremst, bis es in einem Bereich zwischen t₃ und t₄ zum Stillstand kommt bzw. die Geschwindigkeit v kleiner wird als der zweite Schwellenwert V₂. Hiernach oder gleichzeitig hiermit kann auch das Rekuperationsmoment T_{EM} wieder verringert werden, und zwar nach dem Stillstand bis auf einen Wert von 0 Nm. Erst hiernach, wenn also die Geschwindigkeit v unter den zweiten Schwellenwert V₂ gefallen ist (der vorzugsweise 0 km/h beträgt), wird in einem Zeitraum zwischen t₄ und t₅ der Parksperrenaktuator 22 angesteuert, um die Parksperre 20 einzulegen.

Es versteht sich, dass das Bremsmoment im Zeitraum von t₂ bis t₄ zusätzlich von der Bremseinrichtung 46 aufgebracht werden kann.

Ferner versteht sich, dass die elektrische Maschine 12 an den Eingang des Getriebes 14, also an den Eingang eines Teilgetriebes eines Doppelkupplungsgetriebes, angebunden ist, und nach dem Erhalt des Parksperrenbefehls eine geeignete Gangstufe in dem Getriebe 14 eingelegt wird, bei der es sich vorzugsweise um die niedrigste oder die zweitniedrigste Gangstufe des Getriebes 14 handelt. Falls diese Gangstufe bereits eingelegt ist, kann dieser Schritt (S2 in Fig. 2) übersprungen werden. Falls hingegen eine ungeeignete Gangstufe in dem Getriebe (oder Teilgetriebe) eingelegt ist, kann zunächst die ungeeignete Gangstufe ausgelegt und die gewünschte Gangstufe zum Abbremsen des Kraftfahrzeuges 11 eingelegt werden.

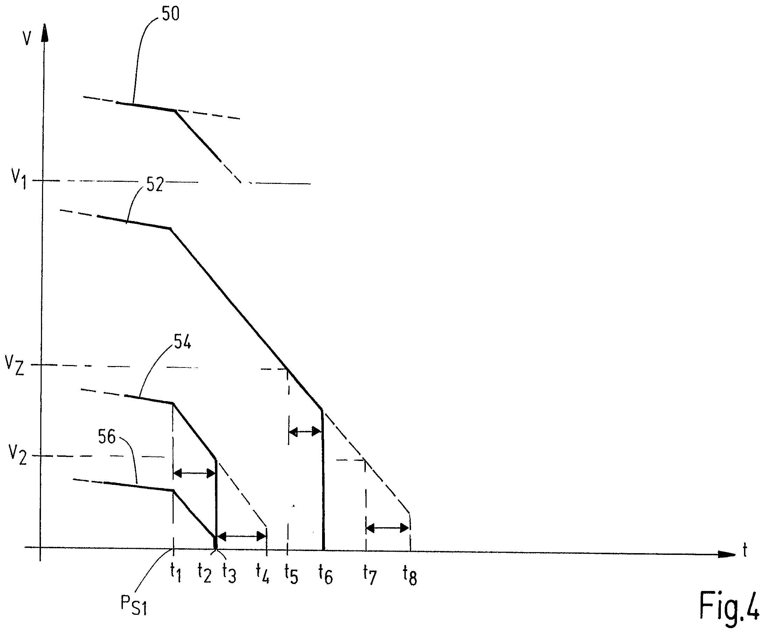

Fig. 4 zeigt die erfindungsgemäßen Ausführungsformen von Verläufen der Geschwindigkeit des Kraftfahrzeuges über der Zeit bei Anwendung des erfindungsgemäßen Verfahrens.

Hierbei ist zu einem Zeitpunkt t₁ ein Parksperrenbefehl P_{S1} eingezeichnet. In Fig. 4 sind vier unterschiedliche Ausgangssituationen gezeigt, entsprechend Kurven 50, 52, 54, 56. In einem ersten Fall ist die Geschwindigkeit v des Kraftfahrzeuges bei Erfassen des Parksperrenbefehls zum Zeitpunkt t₁ größer als V₁. In diesem Fall wird der Parksperrenbefehl in der Regel abgewiesen. Bei manchen Situationen könnte jedoch auch Bremsmoment aufgebracht werden. Demzufolge erfolgt zum Zeitpunkt t₁ entweder keine Geschwindigkeitsänderung oder eine Verringerung der Geschwindigkeit aufgrund eines Bremsmomentes.

Bei 52 ist eine zweite Ausgangssituation gezeigt, bei der die Geschwindigkeit v des Kraftfahrzeuges zum Zeitpunkt t₁ kleiner ist als der erste Schwellenwert V₁. In diesem Fall wird ein Bremsmoment aufgebracht, so dass die Geschwindigkeit sich schneller verringert. In der erfindungsgemäßen Lösung wird dabei bei Erreichen eines Zwischenschwellenwertes Vz (der beispielsweise im Bereich von 2,5 km/h bis 4 km/h liegen kann) zum Zeitpunkt t₅ der Parksperrenaktuator angesteuert. Innerhalb eines Zeitraumes, der in Fig. 4 durch einen Doppelpfeil angedeutet ist, erfolgt nach dem Ansteuern des Parksperrenaktuators das mechanische Einlegen der Parksperre, so dass zum Zeitpunkt t₆ sich die Geschwindigkeit des Kraftfahrzeuges schlagartig auf Null reduziert. In einer alternativen Ausführungsform, die gestrichelt dargestellt ist, wird das Abbremsen zum Zeitpunkt t₅ fortgesetzt, bis der zweite Schwellenwert V₂ erreicht ist (zum Zeitpunkt t₇). Ab diesem Zeitpunkt erfolgt in dieser Variante das Ansteuern des Parksperrenaktuators, so dass zum Zeitpunkt t₈ das Einlegen der Parksperre tatsächlich erfolgt. Man erkennt, dass hierbei die Geschwindigkeit, bei der das mechanische Einlegen erfolgt, geringer ist als bei der ersten Variante, so dass der Fahrer einen geringeren Ruck verspürt.

Das Ansteuern des Parksperrenaktuators bei Erreichen des Zwischenschwellenwertes V_{Z} kann jedoch aus Sicherheitsgründen erforderlich sein.

In einer dritten Variante, die in Fig. 4 bei 54 gezeigt ist, liegt die Geschwindigkeit des Kraftfahrzeuges zum Zeitpunkt t₁ unterhalb des Zwischenschwellenwertes V_{Z}. In diesem Fall wird vorzugsweise ein Bremsmoment aufgebracht, so dass sich die Geschwindigkeit des Kraftfahrzeuges stärker reduziert. Parallel hierzu kann in einer Variante zum Zeitpunkt t₁ der Parksperrenaktuator angesteuert werden, so dass nach einer Verzögerungszeit bei etwa t₃ die Parksperre tatsächlich eingelegt wird. In einer alternativen Variante erfolgt auch hier zunächst das Abbremsen des Kraftfahrzeuges bis zum Zeitpunkt t₂, bei dem die Geschwindigkeit den zweiten Schwellenwert erreicht hat, worauf dann der Parksperrenaktuator angesteuert wird, so dass die Parksperre bei t₄ eingelegt wird (gestrichelt in Fig. 4 dargestellt).

In einer vierten Variante 56 ist die Geschwindigkeit des Kraftfahrzeuges zum Zeitpunkt t₁ kleiner als der zweite Schwellenwert V₂. In diesem Fall wird bei Erfassen des Parksperrenbefehls zum Zeitpunkt t₁ zum einen ein Bremsmoment aufgebracht und zum anderen sofort der Parksperrenaktuator angesteuert, so dass nach einer Verzögerungszeit (etwa bei t₂) die Parksperre mechanisch eingelegt wird.

Insgesamt ergeben sich mit der vorliegenden Erfindung ein erhöhter Komfort, eine längere Lebensdauer der Verzahnung der Parksperre sowie ein schnelleres Einlegen der Parksperre. Insgesamt ergibt sich auch ein niedriges Geräuschniveau, da keine lauten Getriebegeräusche beim Einlegen der Parksperre entstehen. Für den Fall des Abbremsens mittels der elektrischen Maschine wird zudem bis zum Stillstand Rekuperationsenergie gewonnen.

Es versteht sich ferner, dass je nach Komfortwunsch, Zeitdauer und Rekuperationsmoment unterschiedliche Verhalten applizierbar bzw. programmierbar sind, und zwar abhängig von Fahrzeugmasse und sonstigen Einstellungsvorgaben.

Die erfindungsgemäßen Verfahren erfüllen zudem eine Schutzfunktion für die elektrische Maschine, da diese bei einem ruckartigen Einlegen der Parksperre, wie es im Stand der Technik vorkommen kann, beschädigt werden kann, insbesondere dann, wenn der Rotor während dieses Einlegevorganges über eine Gangstufe oder direkt mit der Parksperre verbunden ist. Ferner werden durch dieses Verfahren alle involvierten Getriebekomponenten geschützt. Denn die Massen-Trägheit der elektrischen Maschine wirkt aufgrund der Anbindungs-Übersetzung verstärkt auf Radsatzkomponenten sowie Lager, Lagerstellen, Gehäuse etc.. Diese Kräfte werden durch dieses Verfahren drastisch reduziert.

Ohne das erfindungsgemäße Verfahren wäre bei der Auslegung der Komponenten nicht nur die Stoßbelastung durch die abrupt verzögerte Fahrzeugmasse zu berücksichtigen, sondern auch die der Massen-Trägheit der elektrischen Maschine. Dies sind zwei sowohl zeitlich auch von der Belastungsstärke her voneinander unabhängige Belastungen.

## Patentansprüche

1. Verfahren zum Einlegen einer Parksperre (20) eines Kraftfahrzeugantriebsstranges (10), der eine elektrische Maschine (12), ein Doppelkupplungsgetriebe mit einem ersten und einem zweiten Teilgetriebe (42, 44), wobei die elektrische Maschine (12) mit einem Eingang von einem der zwei Teilgetriebe verbunden ist, und eine Parksperre (20) aufweist, und wobei die Parksperre (20) mittels eines Parksperrenaktuators (22) einlegbar ist, mit den Schritten:
- Erfassen (S1) eines Parksperrenbefehls zum Einlegen der Parksperre (20),
- Erfassen der Geschwindigkeit des Kraftfahrzeuges (11);
- Abbremsen (S3) des Kraftfahrzeuges (11) mittels der elektrischen Maschine (12), wenn die Geschwindigkeit des Kraftfahrzeuges (11) kleiner ist als ein erster Schwellenwert (V₁), und
- Ansteuern (S4) des Parksperrenaktuators (22), um die Parksperre (20) einzulegen, wenn die Geschwindigkeit des Kraftfahrzeuges (11) kleiner ist als ein zweiter Schwellenwert (V₂; V_{Z}), der kleiner ist als der erste Schwellenwert (V₁),
wobei dann, wenn die Geschwindigkeit des Kraftfahrzeugs (11) bei Erfassen des Parksperrenbefehls kleiner ist als der zweite Schwellenwert (V₂) oder ein zwischen dem ersten und dem zweiten Schwellenwert liegenden Zwischenschwellenwert (V_{Z}), die Schritte des Abbremsens des Kraftfahrzeuges (11) und des Ansteuerns des Parksperrenaktuators (22) zumindest abschnittsweise parallel durchgeführt werden und wobei vor dem Bremsschritt (S3) eine Gangstufe in dem Teilgetriebe eingelegt wird, dessen Eingang mit der elektrischen Maschine (12) verbunden ist.

2. Verfahren nach Anspruch 1, wobei das Getriebe (14) eine Mehrzahl von Gangstufen aufweist, die mittels eines Getriebeaktuators (26) ein- und ausgelegt werden.

3. Verfahren nach Anspruch 1, wobei die Gangstufe die niedrigste oder die zweitniedrigste Gangstufe des Getriebes (14) ist.

4. Verfahren zum Einlegen einer Parksperre (20) eines Kraftfahrzeugantriebsstranges (10), der einen Antriebsmotor (12; 30), ein Doppelkupplungsgetriebe mit einem ersten und einem zweiten Teilgetriebe (42, 44), wobei die elektrische Maschine (12) mit einem Eingang von einem der zwei Teilgetriebe verbunden ist, eine Parksperre (20) und eine auf Räder des Kraftfahrzeuges (11) wirkende Bremseinrichtung (46) aufweist, wobei die Parksperre (20) mittels eines Parksperrenaktuators (22) einlegbar ist, mit den Schritten:
- Erfassen eines Parksperrenbefehls zum Einlegen der Parksperre (20),
- Erfassen der Geschwindigkeit des Kraftfahrzeuges (11);
- Abbremsen des Kraftfahrzeuges (11) mittels der Bremseinrichtung (46), wenn die Geschwindigkeit des Kraftfahrzeuges (11) kleiner ist als ein erster Schwellenwert (V₁), und
- Ansteuern des Parksperrenaktuators (22), um die Parksperre (20) einzulegen, wenn die Geschwindigkeit des Kraftfahrzeuges (11) kleiner ist als ein zweiter Schwellenwert (V₂; V_{Z}), der kleiner ist als der erste Schwellenwert (V₁),
wobei dann, wenn die Geschwindigkeit des Kraftfahrzeugs (11) bei Erfassen des Parksperrenbefehls kleiner ist als der zweite Schwellenwert (V₂) oder ein zwischen dem ersten und dem zweiten Schwellenwert liegenden Zwischenschwellenwert (V_{Z}), die Schritte des Abbremsens des Kraftfahrzeuges (11) und des Ansteuerns des Parksperrenaktuators (22) zumindest abschnittsweise parallel durchgeführt werden und wobei vor dem Bremsschritt (S3) eine Gangstufe in dem Teilgetriebe eingelegt wird, dessen Eingang mit der elektrischen Maschine (12) verbunden ist.

## Claims

1. Method for inserting a parking lock (20) of a motor vehicle drive train (10) which has an electric machine (12), a double clutch transmission with a first and a second component transmission (42, 44), the electric machine (12) being connected to an input of one of the two component transmissions, and a parking lock (20), and it being possible for the parking lock (20) to be inserted by means of a parking lock actuator (22), having the steps:
- detecting (S1) of a parking lock command for inserting the parking lock (20),
- detecting of the speed of the motor vehicle (11);
- braking (S3) of the motor vehicle (11) by means of the electric machine (12) if the speed of the motor vehicle (11) is lower than a first threshold value (V₁), and
- actuating (S4) of the parking lock actuator (22), in order to insert the parking lock (20) if the speed of the motor vehicle (11) is lower than a second threshold value (V₂, V_{Z}) which is lower than the first threshold value (V₁),
the steps of braking of the motor vehicle (11) and actuating of the parking lock actuator (22) being carried out at least in sections in parallel when, in the case of detecting of the parking lock command, the speed of the motor vehicle (11) is lower than the second threshold value (V₂) or an intermediate threshold value (V_{Z}) which lies between the first and the second threshold value, and, before the braking step (S3), a gear stage being engaged in the component transmission, the input of which is connected to the electric machine (12).

2. Method according to Claim 1, the transmission (14) having a plurality of gear stages which are engaged and disengaged by means of a transmission actuator (26).

3. Method according to Claim 1, the gear stage being the lowest or the second lowest gear stage of the transmission (14).

4. Method for inserting a parking lock (20) of a motor vehicle drive train (10) which has a drive motor (12; 30), a double clutch transmission with a first and a second component transmission (42, 44), the electric machine (12) being connected to an input of one of the two component transmissions, a parking lock (20) and a brake device (46) which acts on wheels of the motor vehicle (11), it being possible for the parking lock (20) to be inserted by means of a parking lock actuator (22), having the steps:
- detecting of a parking lock command for inserting the parking lock (20),
- detecting of the speed of the motor vehicle (11);
- braking of the motor vehicle (11) by means of the brake device (46) if the speed of the motor vehicle (11) is lower than a first threshold value (V₁), and
- actuating of the parking lock actuator (22), in order to insert the parking lock (20) if the speed of the motor vehicle (11) is lower than a second threshold value (V₂; V_{Z}) which is lower than the first threshold value (V₁),
the steps of braking of the motor vehicle (11) and actuating of the parking lock actuator (22) being carried out at least in sections in parallel when, in the case of detecting of the parking lock command, the speed of the motor vehicle (11) is lower than the second threshold value (V₂) or an intermediate threshold value (V_{Z}) which lies between the first and the second threshold value, and, before the braking step (S3), a gear stage being engaged in the component transmission, the input of which is connected to the electric machine (12).

## Revendications

1. Procédé pour engager un frein de stationnement (20) d'une chaîne cinématique de véhicule automobile (10), laquelle possède une machine électrique (12), une boîte de vitesses à double embrayage ayant une première et une deuxième boîte de vitesses partielle (42, 44), la machine électrique (12) étant reliée à une entrée de l'une des deux boîtes de vitesses partielles, et un frein de stationnement (20), et le frein de stationnement (20) pouvant être engagé au moyen d'un actionneur de frein de stationnement (22), comprenant les étapes suivantes :
- détection (S1) d'une instruction de freinage de stationnement en vue d'engager le frein de stationnement (20),
- détection d'une vitesse du véhicule automobile (11) ;
- freinage (S3) du véhicule automobile (11) au moyen de la machine électrique (12) lorsque la vitesse du véhicule automobile (11) est inférieure à une première valeur de seuil (V₁), et
- commande (S4) de l'actionneur de frein de stationnement (22) en vue d'engager le frein de stationnement (20) lorsque la vitesse du véhicule automobile (11) est inférieure à une deuxième valeur de seuil (V₂ ; V_{Z}), qui est inférieure à la première valeur de seuil (V₁),
lorsque la vitesse du véhicule automobile (11), lors de la détection de l'instruction de freinage de stationnement, est inférieure à la deuxième valeur de seuil (V₂) ou à une valeur de seuil intermédiaire (V_{Z}) comprise entre la première et la deuxième valeur de seuil, les étapes de freinage du véhicule automobile (11) et de commande de l'actionneur de frein de stationnement (22) étant alors exécutées en parallèle au moins par portions et, avant l'étape de freinage (S3), un rapport étant engagé dans la boîte de vitesse partielle dont l'entrée est reliée à la machine électrique (12).

2. Procédé selon la revendication 1, la boîte de vitesses (14) possédant une pluralité de rapports qui peuvent être engagés et sortis au moyen d'un actionneur de boîte de vitesses (26).

3. Procédé selon la revendication 1, le rapport étant le plus petit ou le deuxième plus petit rapport de la boîte de vitesses (14).

4. Procédé pour engager un frein de stationnement (20) d'une chaîne cinématique de véhicule automobile (10), laquelle possède un moteur de propulsion (12 ; 30), une boîte de vitesses à double embrayage ayant une première et une deuxième boîte de vitesses partielle (42, 44), la machine électrique (12) étant reliée à une entrée de l'une des deux boîtes de vitesses partielles, un frein de stationnement (20) et un dispositif de freinage (46) qui agit sur les roues du véhicule automobile (11), le frein de stationnement (20) pouvant être engagé au moyen d'un actionneur de frein de stationnement (22), comprenant les étapes suivantes :
- détection d'une instruction de freinage de stationnement en vue d'engager le frein de stationnement (20),
- détection de la vitesse du véhicule automobile (11) ;
- freinage du véhicule automobile (11) au moyen du dispositif de freinage (46) lorsque la vitesse du véhicule automobile (11) est inférieure à une première valeur de seuil (V₁), et
- commande de l'actionneur de frein de stationnement (22) en vue d'engager le frein de stationnement (20) lorsque la vitesse du véhicule automobile (11) est inférieure à une deuxième valeur de seuil (V₂ ; V_{Z}), qui est inférieure à la première valeur de seuil (V₁),
lorsque la vitesse du véhicule automobile (11), lors de la détection de l'instruction de freinage de stationnement, est inférieure à la deuxième valeur de seuil (V₂) ou à une valeur de seuil intermédiaire (V_{Z}) comprise entre la première et la deuxième valeur de seuil, les étapes de freinage du véhicule automobile (11) et de commande de l'actionneur de frein de stationnement (22) étant alors exécutées en parallèle au moins par portions et, avant l'étape de freinage (S3), un rapport étant engagé dans la boîte de vitesse partielle dont l'entrée est reliée à la machine électrique (12).
